# EUROPEAN PATENT APPLICATION

(11) **EP 1 874 018 A1**
(43) Date of publication of application: **02.01.2008**
(21) Application number: 06116300.2
(22) Date of filing: 29.06.2006
(51) Int. Cl.: H04M 3/493

(54) **Mobile phone browser supporting data transmission accompanied by an audio transmission**

(71) Applicant: Research In Motion Limited, Waterloo, Ontario N2L 3W8 (CA)
(72) Inventor: Lai, Frederick Chee-Kiong, Waterloo Ontario N2V 2L1 (CA)
(74) Representative: Rickard, David John

(57) **Abstract**

A markup language specification is set forth for providing pseudo-rich media during phone calls, and to implement two endpoints that support this specification. Each implemented endpoint functions as a half-phone and half-browser, where the phone call consists partly of the traditional full-duplex audio stream between callers, supplemented by pseudo-rich media being transmitted from one party to the other. The pseudo-rich media includes, but is not limited to, text, pictures and hyperlinks.
The embodiment shows transmission of data for display and voice information to a mobile phone from an IVR system using VoiceXML script. The audio information is sent inband and the data for display is sent outband and is decoded on the phone, suggesting an analogue connection between phone and server. The embodiment however specifies that the phone-server connection is packet-switched and thus digital.

## Description

The following is directed in general to communication devices, and more particularly to a hybrid phone/browser for providing simultaneous audio and visual content while consuming minimal bandwidth.

Phone applications that use cellular networks or WLAN networks are traditionally considered to be audio applications. The content of a traditional phone call is typically limited to a full duplex audio stream that is shared between two or more callers. One problem with audio-only connections is that information is shared very slowly, and is limited by the ability of the listening party to hear the talking party. Some types of information, such as phone numbers, product ID numbers, menu selections, etc., are not well communicated through audio. Background noise, drops in voice quality and the time required to hear an entire pre-recorded audio stream make an indication of specific information unduly laborious and grueling.

Videoconferencing applications have attempted to solve the limitations of audio-only communications by allowing users to send video streams to each other during a call, where the video is captured by respective video cameras (or other video streaming mechanisms) in order to convey images of each caller. The video streams are then transmitted between communication peers for rendering in real-time.

One significant disadvantage of videoconferencing applications is that the bandwidth consumed is extremely large while the information presented is limited only to an image of the remote peer (i.e. the information does not provide much in terms of value added).

It is also known in the art to provide a cellular-phone with a Web browser. However, there is no integration between the phone and browser applications in such prior art devices.

According to an aspect of this specification, simultaneous audio and visual content are preferably provided at low bandwidth, to provide dynamic, useful information to the user. A markup language specification is set forth for providing pseudo-rich media during phone calls and for implementing two endpoints that support this specification. Each implemented endpoint preferably functions as a half-phone, half-browser (or half-server, as the case may be). In other words, a phone call consists partly of the traditional full-duplex audio stream between the parties and is supplemented by pseudo-rich media being transmitted from one of the parties to the other. It is contemplated that the pseudo-rich media include, but not be limited to, text, pictures and hyperlinks.

### Brief Description of the Drawings

The foregoing will be better understood with reference to the description and to the following drawings, in which:

Figure 1, including Figures 1 A, 1 B, 1C and 1 D, is a schematic representation of a mobile device with a user interface supporting communication via the specification set forth herein;

Figure 2 is a block diagram showing connection of the mobile device of Figure 1 with a server for providing interactive voice response (IVR);

Figure 3 is a simplified sequence diagram showing exemplary communication between the mobile device and the server of Figure 2; and

Figures 4A, 4B and 4C are internal architecture diagrams for implementing various exemplary embodiments of the user interface for the mobile device of Figure 2.

### Description of Preferred Embodiments

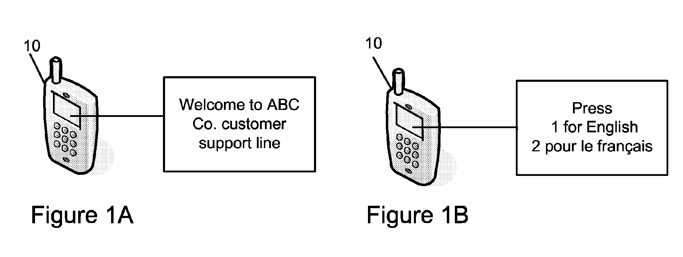

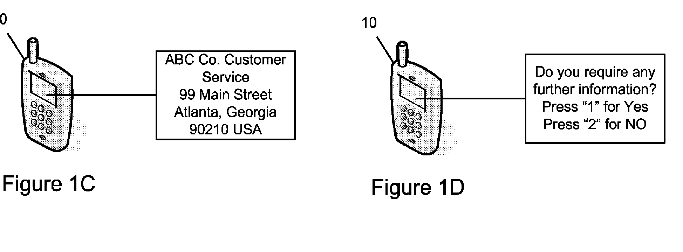

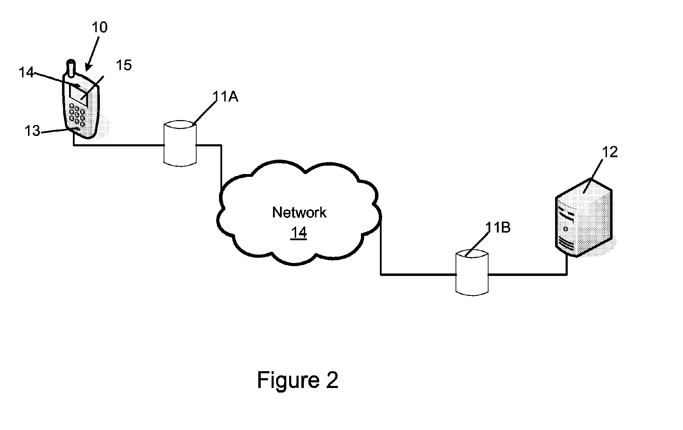

With reference to Figures 1 and 2, a first user endpoint is connected to a second user endpoint over a peer-to-peer network. More particularly, a mobile device 10 (first endpoint) having a pseudo-rich phone browser, is connected through a proxy, a gateway or a firewall (designated generally by 11 A) to the network 14. It will be appreciated that this connection can include a wireless connection, for a cellular phone, for example. The mobile device 10 includes a microphone 13, speaker or earpiece 14 and a display 15.

A server 12 (second endpoint) is connected to the network 14 via, for example, a proxy, a gateway, a firewall or a load balancer (designated generally by 11 B). The server can, for example, include an interactive voice response system (IVR). The network 14 supports a pseudo-rich communication specification, as further discussed below.

According to the example of Figures 1 A, 1 B, 1C and 1 D, the user of mobile device 10 places a call to the ABC Company customer support helpline, which utilizes an IVR server 12 that supports the pseudo-rich specification set forth herein.

Once the call between device 10 and server 12 has been established, an automated voice response from the IVR greets the user with an audio message that is reproduced via the speaker 14 at device 10, such as: "Welcome to the ABC Company consumer helpline... etc.". At the same time, through the markup language (i.e. script) discussed below, text corresponding to the voice announcement is displayed as an image at display 15, via the phone browser application (Figure 1 A). The text may be accompanied by a background picture of the company logo or other suitable images. As the script continues, it asks "for service in English, press 1, pour le service en français appuyer sur le 2. To hear this information again, press star". At the same time, markup information is pushed to the phone at endpoint 10 (Figure 1 B) to display: "Press: 1 for English, 2 pour le français". In response, the user can, optionally, press "*" to hear the information again from the automated attendant. Since the phone supports pseudo-rich media, however, the user can merely glance at the screen of the phone to view the information rather than pressing "*" to hear the information again.

Alternatively, if the server 12 incorporates voice recognition technology then the user may respond by issuing voice commands that are recognized by the server 12 and then acted upon. Such voice recognition systems are well known in the art.

During the call, the phone 10 receives messages from the IVR server 12 out of band with the audio connection. That is, the user at phone 10 does not hear the data being transmitted to the phone, while the phone decodes the data for display.

The user can continue navigating through the IVR system to find the address of the organization. As the IVR reads out the information for the user to hear, the information is simultaneously displayed, as shown in Figure 1C.

After receiving the desired information, the user requests shutdown by, for example, responding "no" to the question "Do you require any further information?" (Figure 1 D). In response to receipt of the shutdown request, the call is ended, while retaining the graphic information concerning a contact address on the display screen of the phone 10.

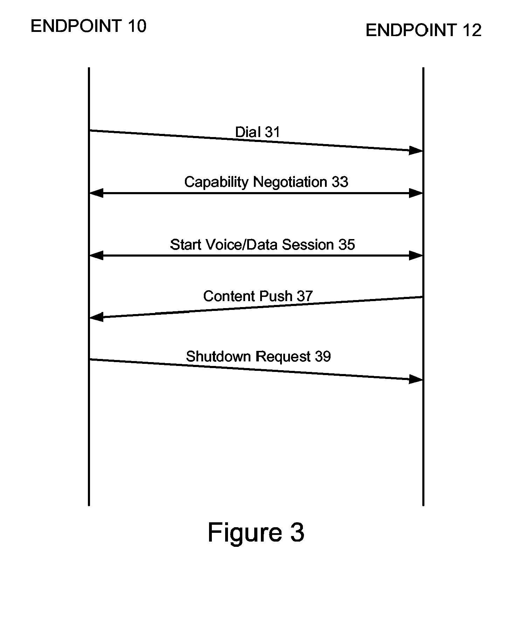

Figure 3 shows a simplified sequence diagram of messages exchanged to provide simultaneous audio and visual communication between the mobile device 10 and the server 12, according to an exemplary embodiment. The user of mobile device 10 begins by dialing the appropriate number to connect with the second endpoint (Dial 31). After establishing a connection, the pseudo rich phone browser within device 10 and the IVR server 12 negotiate capabilities (Capability Negotiation 33). When the capabilities of the pseudo rich phone browser are determined by the IVR, the voice and data session is started (Start Voice/Data Session 35). The IVR server 12 sends audio to the phone 10 while carrying out speech recognition as well as DTMF tone detection on audio received from the phone. Data content and audio are sent simultaneously by the IVR server 12 to the phone 10 based on audio responses received from the phone (Content Push 37). In carrying out this communication, packet-switched data is transmitted from the IVR server 12 to the phone 10. Data can be pushed to the phone any number of times. In response to receipt of the shutdown request (Shutdown Request 39), the call is ended.

The IVR example of Figures 1 - 3 is but one of many possible examples of a method and apparatus for providing simultaneous full-duplex audio and a pseudo-rich media stream between parties to a call. Additional examples include creating a custom "voice page" on a home server, similar to well-known individual home pages, but which is accessible via a browser-enabled phone 10, and provisioning of a desktop phone browser, as discussed in greater detail below with reference to Figure 5.

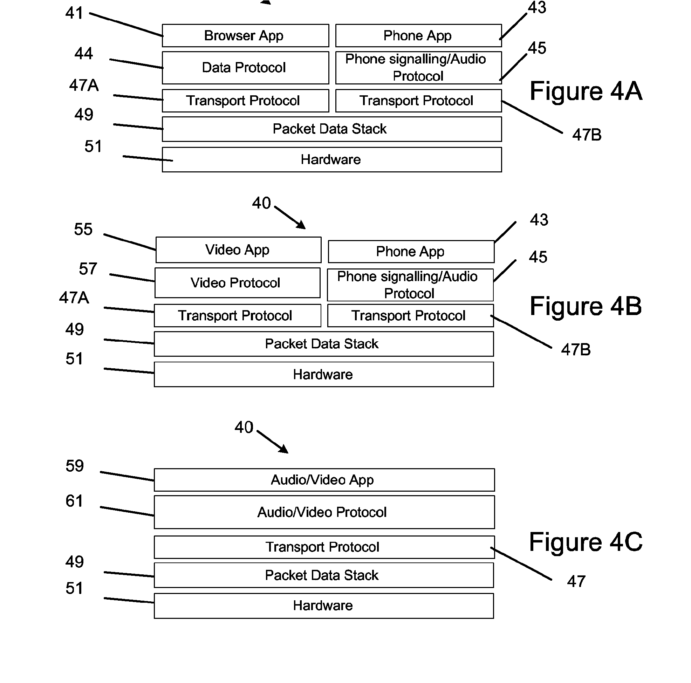

Figure 4A shows an internal architecture for implementing the user interface 40 within device 10 of Figure 1, according to one embodiment. According to this embodiment, separate browser and phone applications 41 and 43 are employed while the server 12 coordinates timing for pushing the pseudo-rich browser data, audio and speech recognition. The browser and phone components represent the highest layer (Application Layer 7) of the Open Systems Integration (OSI) model of data networking. Data protocol layer 44 and phone signaling/audio protocol 45 form the Presentation Layer of the OSI model. Transport protocol stacks 47A and 47B (OSI Layer 4) manage end-to-end control and error checking to ensure complete data transfer. Packet data stack 49 forms the data link layer (Layer 2) for node-to-node validity and integrity of the data transmission. Hardware 51 is the physical layer (Layer 1) of the OSI model responsible for passing bits onto and receiving them from the connecting medium.

The data structure of the packets that are transmitted is based on a modified version of the Voice Extensible Markup Language (VoiceXML). The IVR script is written to allow synchronization of voice and data for playback and display. As described above, images are displayed while sounds are simultaneously played back. Exemplary Voice XML code for implementing the pseudo-rich hybrid phone browser of the present application is as follows:

```
 <vxm version=" 2. 0" xm ns=" http: / / www. w3. org/ 2001/ vxm "
           xm ns: xsi =" http://www. w3. org/ 2001 /XMLSchema- instance"
           xsi : schemaLocat i on=" ht t p: / / www. w3. or g/ 2001/ vxm
           http://www. w3. org/ TR/ voicexm 20/vxm . xsd" >
 
<! - - begi editable region- - >
<t abl e wi dt h=" 100%" bor der =" 0" cel I spacing=" 4" cel I padding=" 4" >
<tr align=" left " v align=" t op" >
<t d wi dt h=" 46%" ><i mg sr c=" / i mages/ titles/ ABC_name. gi f " width=" 160"
           hei ght =" 26" al t =" ABC Company" / >
<br / >
<span cl ass=" cM' >You have reached ABC Company.
Pl ease say the extension or name of the person you with to reach. </ p>
<! - - l Nsert some cool graphics code here: animated icon, interesting
           visual effects, etc. - - >
<t able wi dt h=" 590" hei ght ="221"
           backgr ound=" / i mages/ home/ 8700_7100_ABC_home. j pg"
           st yl e=" background- repeat : no- repeat " >
<t r >
<t d wi dt h=" 95" height =" 150" ><a hr ef =" http: / / www. ABC. com products
           / index. sht ml " target =" other " ><i mg sr c=" / images/ transparent . gif "
           border =" 0" width=" 95" height =" 150" al t =" Product A" ></ a></ t d>
<t d width=" 495" height =" 221 " rowspan=" 2" >
           <a href =" http: / / www. ABC. com product s/ index. sht ml "
               target =" other " ><i mg sr c=" / images/ transpar ent . gif " border =" 0"
           width=" 495" height =" 221 " al t =" Product A" ></ a></ t d>
</t r>
<t r >
<! - - <t d wi dt h=" 95" ><a hr ef =" ht t p: / / www. ABC. com/ news. sht m "
           t ar get =" ot her " ><i mg sr c=" / i mages/ pr omos/ cust omer . gi f "
           hei ght ="71" wi dt h=" 95" al t =" Sat i sf i ed Cust omer s"
           bor der =" 0" / ></ a></ t d>- - >
<t d></ t d>
</t r>
</ t abl e>
</td>
</t r>
</ table>
<! - - end editable region - - >
 
<f or m i d=" no_bar gei n_f or m">
<propert y name=" bargein" val ue=" f al se" / >
<block>
<prompt>
       This introductory prompt cannot be barged into.
</ prompt>
<pr ompt >
       And nei t her can t hi s pr ompt .
</ pr ompt >
<pr ompt bar gei n=" true" >
           Thanks f or cal l i ng ABC! Do you know the ext ension of the
           person you wi sh to reach?
</ pr ompt >
</ bl ock>
 
<field type=" bool ean" >
<pr ompt >
       Please say yes or no.
</ pr ompt >
</field>
<! - - more prompt s and voi ce r ecogni t i on code and more t ext di spl ayed on
the
           screen. - - >
 
</ f or m>
</ vxm >
```

Turning to Figures 4B and 4C alternative internal architectures are depicted for implementing the user interface of Figures 1 - 3. Referring first to Figure 4B, an embodiment is illustrated in which a video application 55 feeds the images, rather than a browser application as in Figure 4A. The video and phone applications 55 and 43, are separate as in the architecture of Figure 4A. The server 12, however, coordinates timing for pushing video images, sound and when to carry out speech recognition.

Referring to Figure 4C, the video and audio are integrated in the same application 59 and protocol 61 as in, for example, a videophone. Server 12 (in this case a video server) therefore coordinates timing for pushing video images, sound and when to carry out speech recognition based on state.

A person skilled in the art, having read this description, may conceive of variations and alternative embodiments. For example, the data structure of the packets that are transmitted is not limited to a modified version of VoiceXML as other data structures and protocols are possible. It is contemplated that HTML content could be pushed from the IVR to the first endpoint by embedding an HTML page in the payload section of a Session Initiation Protocol (SIP) message (RFC3261). A SIP INFO method (RFC2976), or another similar method, can be employed. It is also contemplated that other media and audio/video sequencing protocols can be employed. For example, an audio/video protocol that is similar to Macromedia Flash^{™} can be used while routing voice traffic on the audio end, as well as speech recognition. Still other variations and modifications may occur to those skilled in the art.

All such variations and alternative embodiments are believed to be within the ambit of the claims appended hereto.

## Claims

1. A device (10) for providing simultaneous audio and visual content, comprising:
a user interface (40) for receiving audio content over a full-duplex audio link and pseudo-rich media content relating to said audio content;
a speaker (14) for reproducing said audio content; and
a display (15) for reproducing said pseudo-rich media content.

2. The device of claim 1, wherein said user interface (40) comprises separate browser and phone applications (41, 43), separate data and phone signaling/audio protocols (44, 45), separate transport protocol stacks (47A, 47B), a packet data stack (49) and a physical layer (51).

3. The device of claim 1, wherein said user interface (40) comprises separate video and phone applications (55, 43), separate video and phone signaling/audio protocols (57, 45), separate transport protocol stacks (47A, 47B), a packet data stack (49) and a physical layer (51).

4. The device of claim 1, wherein said user interface (40) comprises an integrated video and audio application (59) an integrated video and audio protocol (61), a transport protocol stack (47), a packet data stack (49) and a physical layer (51).

5. A method of providing simultaneous audio and visual content for a portable electronic device (10), comprising:
transmitting audio content and pseudo-rich media content relating to said audio content;
reproducing said audio content from a speaker (14) of said portable electronic device (10); and
reproducing said pseudo-rich media content on a screen (15) of said portable electronic device.

6. The method of claim 5, wherein said pseudo-rich media content conforms to a markup language specification.

7. The method of claim 5, wherein said pseudo-rich media content comprises at least one of text, pictures and hyperlinks.

8. The method of claim 5, further comprising transmitting messages responsive to said audio content and pseudo-rich media content, thereby initiating generation of further audio content and pseudo-rich media content responsive to said messages.

9. A communication system, comprising:
a server (12) for generating simultaneous audio and pseudo-rich media content relating to said audio content; and
a device (10) for receiving and reproducing said simultaneous audio and pseudo-rich media content, and for transmitting messages to said server responsive to said audio content and pseudo-rich media content, whereupon said server generates further audio content and pseudo-rich media content responsive to said messages.

10. The communication system of claim 9, wherein said server (12) transmits said audio content to said device over a full-duplex audio link and said pseudo-rich media content over a data link.

11. The communication system of claim 9, wherein said device (10) comprises separate browser and phone applications (41, 43), separate data and phone signaling/audio protocols (44, 45), separate transport protocol stacks (47A, 47B), a packet data stack (49) and a physical layer (51).

12. The communication system of claim 9, wherein said device (10) comprises separate video and phone applications (55, 43), separate video and phone signaling/audio protocols (57, 45), separate transport protocol stacks (47A, 47B), a packet data stack (49) and a physical layer (51).

13. The communication system of claim 9, wherein said device (10) comprises an integrated video and audio application (59) an integrated video and audio protocol (61), a transport protocol stack (47), a packet data stack (49) and a physical layer (51).

14. The communication system of claim 9, wherein said pseudo-rich media content conforms to a markup language specification.

15. The communication system of claim 9, wherein said pseudo-rich media content comprises at least one of text, pictures and hyperlinks.

16. The communication system of claim 9, wherein said server (12) implements an Interactive Voice Response (IVR) system.

17. The communication system of claim 16, wherein said Interactive Voice Response (IVR) system comprises a voice recognition capability for recognizing and responding to user voiced commands.

18. A computer program product for providing simultaneous audio and visual content in a mobile device (10) comprising a user interface (40) for receiving audio content over a full-duplex audio link and pseudo-rich media content relating to said audio content, said computer program product comprising a computer readable medium embodying program code executable by a processor of said mobile device for implementing the method of any one of claims 5 to 8.

## Amended claims

### Amended claims in accordance with Rule 137(2) EPC.

**1.** A method of providing simultaneous audio and visual content for a portable electronic device (10) in communication with an Interactive Voice Response server (12) comprising:
transmitting from said Interactive Voice Response (IVR) server (12) to said portable electronic device (10) audio content over a full duplex audio link and pseudo-rich media content relating to and synchronized with said audio content over a data link;
receiving messages from said portable electronic device (10) at said Interactive Voice Response (IVR) server (12) responsive to said audio content and pseudo-rich media content; and
initiating generation of further audio content and pseudo-rich media content within said Interactive Voice Response (IVR) server (12) for transmission to said portable electronic device (10) responsive to said messages.

**2.** The method of claim 1, wherein said pseudo-rich media content conforms to a markup language specification.

**3.** The method of claim 1 or 2, wherein said pseudo-rich media content comprises at least one of text, pictures and hyperlinks.

**4.** The method of claim 1, 2 or 3 comprising reproducing said audio content from a speaker (14) of said portable electronic device (10); and reproducing said pseudo-rich media content on a screen (15) of said portable electronic device.

**5.** A communication system, comprising:
An Interactive Voice Response server (12) for generating synchronized audio and pseudo-rich media content relating to and synchronized with said audio content;
means for transmitting the audio content over a full duplex audio link and the pseudo-rich media content over a data link, and
a device (10) for receiving and reproducing said synchronized audio and pseudo-rich media content, and for transmitting messages to said server responsive to said audio content and pseudo-rich media content, whereupon said server (12) generates further audio content and pseudo-rich media content responsive to said messages for sending to said device (10).

**6.** The communication system of claim 5, wherein said device (10) comprises separate browser and phone applications (41, 43), separate data and phone signaling/audio protocols (44, 45), separate transport protocol stacks (47A, 47B), a packet data stack (49) and a physical layer (51).

**7.** The communication system of claim 5, wherein said device (10) comprises separate video and phone applications (55, 43), separate video and phone signaling/audio protocols (57, 45), separate transport protocol stacks (47A, 47B), a packet data stack (49) and a physical layer (51).

**8.** The communication system of claim 5, wherein said device (10) comprises an integrated video and audio application (59) an integrated video and audio protocol (61), a transport protocol stack (47), a packet data stack (49) and a physical layer (51).

**9.** The communication system of any of claims 5 to 8, wherein said pseudo-rich media content conforms to a markup language specification.

**10.** The communication system of claim 9, wherein said pseudo-rich media content comprises at least one of text, pictures and hyperlinks.

**11.** The communication system of any of claims 5 to 10, wherein said server (12) implements an Interactive Voice Response (IVR) system comprising a voice recognition capability for recognizing and responding to user voiced commands.

**12.** An Interactive Voice Response (IVR) server (12) for providing simultaneous audio and visual content to a portable electronic device (10), comprising:
means for transmitting to said portable electronic device (10) audio content and pseudo-rich media content relating and synchronized to said audio content, such that said audio content and pseudo-rich media content are reproduced within said portable electronic device;
means for receiving messages from said portable electronic device (10) responsive to user input; and
means for initiating generation of further audio content and pseudo-rich media content and transmitting further audio content and pseudo-rich media content said to said portable electronic device (10) responsive to receipt of said messages.

**13.** The Interactive Voice Response (IVR) server (12) of claim 12, wherein said pseudo-rich media content conforms to a markup language specification.

**14.** The Interactive Voice Response (IVR) server (12) of claim 12 or 13, wherein said pseudo-rich media content comprises at least one of text, pictures and hyperlinks.

**15.** The Interactive Voice Response (IVR) server (12) implementing an Interactive Voice Response (IVR) system comprising a voice recognition capability for recognizing and responding to user voiced commands.
